# EUROPEAN PATENT SPECIFICATION

(11) **EP 4 286 584 B1**
(45) Date of publication and mention of the grant of the patent: **24.04.2024**
(21) Application number: 22177095.1
(22) Date of filing: 02.06.2022
(51) Int. Cl.: D21H 11/10, B32B 29/00, D21H 11/14, D21H 11/18, D21H 21/16, D21H 27/10, D21H 27/32, D21H 27/38

(54) **LIQUID PACKAGING BOARD**
FLÜSSIGKEITSVERPACKUNGSKARTON
CARTON D'EMBALLAGE DE LIQUIDE

(43) Date of publication of application: 06.12.2023
(73) Proprietor: Billerud Aktiebolag (publ), 169 27 Solna (SE)
(72) Inventor: ATTEMALM, Adam, 653 50 Karlstad (SE); NYGÅRDS, Mikael, 146 50 Tullinge (SE)
(74) Representative: Kransell & Wennborg KB

(56) References cited:
- EP-A1- 1 861 544
- EP-A1- 3 080 354
- SE-A1- 1 751 582
- US-A1- 2021 002 830
- US-A1- 2021 262 169
- HUANG HUI ET AL: "Quasi static analysis of creasing and folding for three paperboards", MECHANICS OF MATERIALS, vol. 69, no. 1, 1 February 2014 (2014-02-01), pages 11-34, XP055976515, NL ISSN: 0167-6636, DOI: 10.1016/j.mechmat.2013.09.016

## Description

### TECHNICAL FIELD

The present disclosure relates to the field of manufacture of liquid packaging board.

### BACKGROUND

Liquid packaging board (LPB) is an engineered material that often consists of different layers and interfaces. This generates an out-of-plane (z) profile that can be designed for optimal functionality or cost performance. Commercial LPB often has a relatively bulky middle ply to obtain high bending stiffness with a low amount of fibers.

Creasing and subsequent folding is necessary to convert LPB into packages. In the creasing operation, a male ruler is pressed against the board, which is positioned on top of a female die. The purpose of the creasing operation is to facilitate subsequent folding. During folding and forming, there is however a risk of cracking.

EP3080354A1 discloses a multi-ply paperboard characterized in that the middle ply of the paperboard comprises at least 50 % of high -temperature chemithermomechanical pulp (HT-CTMP) from hardwood fibers. According to EP3080354A1, it shown that the use of HT-CTMP from hardwood fibers in the middle ply enables the production of a paperboard with a very high bulk and with maintained strength properties and significantly improves the brightness properties and the formation of the paperboard.

SE1751582A1 relates to a multi-layer paperboard produced in a full-scale paperboard machine. The multi-layer paperboard comprises a top layer, a bottom layer and a middle layer, which middle layer is arranged between the top layer and the bottom layer. The top layer is formed from a top layer pulp comprising a chemical pulp and the middle layer is formed from a middle layer pulp comprising mechanical pulp, such as chemithermomechanical pulp (CTMP) or thermomechanical pulp (TMP). The multi-layered paperboard is characterized in that the tensile energy absorption (TEA) index according to ISO 1924-3 in the machine direction (MD) of the top layer is above 900 J/kg.

Huang Hui et al. ("Quasi static analysis of creasing and folding for three paperboards", MECHANICS OF MATERIALS, vol. 69, no. 1, 1 February 2014 (2014-02-01), pages 11-34) studied the creasing and folding behavior of three paperboards both experimentally and numerically. Creasing and folding studies were performed on strips in both the machine direction and the cross machine direction. A finite element model that mimicked the experimental creasing and folding setup was developed, and the creasing and folding behavior could be well predicted for all three paperboards. An experimental characterization scheme consisting of three experiments was proposed and shown to be sufficient to predict the creasing and folding behavior. For the whole paperboard the shear strength profiles in the through thickness direction was determined with the notched shear test. Each ply was laid free by grinding, and density measurements and in-plane tension tests were performed on the bottom, middle and top plies of each paperboard. Instead of assuming uniform properties in each ply, the shear strength profiles were used to map the measured properties in the through thickness direction. Numerical simulations were performed when the ply and interface properties of the paperboards were altered to follow different shear strength profiles. This was done in order to mimic different production strategies. It was shown that the interface strengths mainly influenced the folding behavior. Whereas altered the ply properties affected the creasing force needed.

US 2021/002830 A1 discloses a method for manufacturing a multi-layered paperboard, which includes at least two fibrous layers. At least one layer of the multi-layered paperboard is treated by applying an aqueous solution of a first strength component in dissolved form including anionic strength polymer and/or amphoteric strength polymer composition on a surface of layer. Further, an aqueous solution of a cationic second strength component in dissolved form is added to a fibre stock from which at least one of the fibrous layers joined together is formed.

### SUMMARY

An objective of the present disclosure is to provide for reduced cracking tendency of LPB during folding and forming.

Accordingly, the present disclosure provides a method of producing a multi-layered liquid packaging board (LPB) comprising a print layer, a back layer and a middle layer, said method comprising the steps of:
- providing a chemithermomechanical pulp (CTMP) and forming a middle layer furnish comprising the CTMP, broke pulp, softwood kraft pulp and hydrophobic size;
- forming a middle layer web from the middle layer furnish in a forming section of a full-scale paperboard machine;
- forming a print layer web from a print layer furnish in the forming section, which print layer furnish comprises hydrophobic size;
- forming a back layer web from a back layer furnish in the forming section, which print layer furnish comprises hydrophobic size;
- merging the print layer web to the middle layer web by couching, preferably at a couching dryness above 10%, such as above 13%,

wherein the z strength of the CTMP is at least 150 kPa, such as at least 180 kPa, when measured according to ISO 15754:2009 after sheet forming according to ISO 5269-2:2004;
the tensile index of the CTMP is above 15 Nm/g when measured according to ISO 1924-3 after sheet forming according to ISO 5269-1:2005;
the proportion of CTMP in the middle layer furnish is above 20%, but below 45%; and
less than 1 g/m² of starch is provided in the interface between the print layer web and the middle layer web.

### BRIEF DESCRIPTION OF THE DRAWINGS

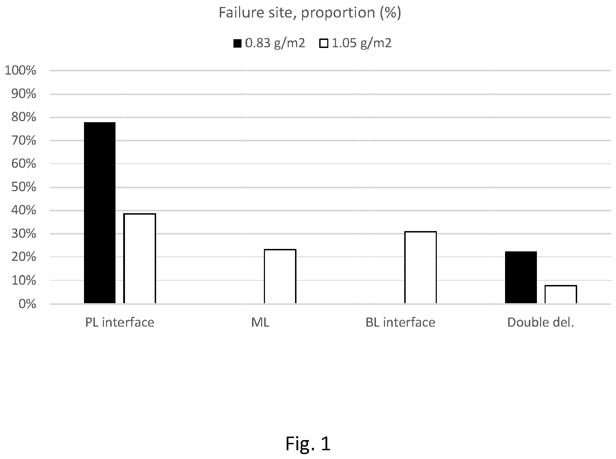

Fig. 1 shows results from testing of samples obtained from a machine trial carried out during production of a 290 g/m² three-layered (non-LPB) board having a middle layer formed from a furnish comprising 45% CTMP, 45% broke and 10% kraft pulp. During one period of the trial, the amount of spray starch applied in the print layer/middle layer interface was 0.83 g/m². During another period of the trial, the amount of spray starch applied in the print layer/middle layer interface was 1.05 g/m². For each amount, Fig. 1 shows the proportion of samples in which the failure occurred in:
   (i) the print layer/middle layer interface ("PL interface");
   (ii) the middle layer ("ML");
   (iii) the back layer/middle layer interface ("BL interface"); and
   (iv) both interfaces ("Double del.").

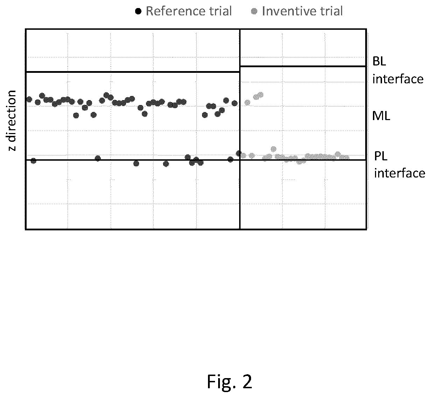

Fig. 2 shows results of Scott Bond tests on samples obtained from the Reference trial (n=50) and the Inventive trial (n=25). In detail, Fig. 2 presents the point of failure, i.e. where in the z direction the board broke during Scott Bond testing, for each tested sample. The abbreviations used in Fig. 2 are explained above with reference to Fig. 1.

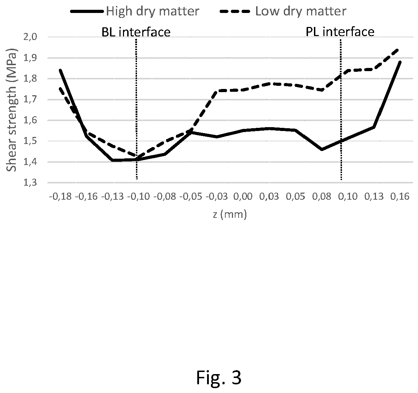

Fig. 3 shows the shear strength profiles across the z direction of boards produced in the high dryness run and the low dryness run. The abbreviations used in Fig. 3 are explained above with reference to Fig. 1.

### DETAILED DESCRIPTION

The present disclosure provides a method of producing a multi-layered liquid packaging board (LPB) comprising a print layer, a back layer and a middle layer. As understood by the skilled person, the middle layer is arranged between the print layer and the back layer.

The method comprises the steps of:
- providing a CTMP and forming a middle layer furnish comprising the CTMP, broke pulp, softwood kraft pulp and hydrophobic size;
- forming a middle layer web from the middle layer furnish in a forming section of a full-scale paperboard machine;
- forming a print layer web from a print layer furnish in the forming section, which print layer furnish comprises hydrophobic size; and
- forming a back layer web from a back layer furnish in the forming section, which print layer furnish comprises hydrophobic size.

The presence of hydrophobic size in each of the above-mentioned furnishes is typical for a method of manufacturing LPB.

The amount of hydrophobic size in each of the print layer furnish and the back layer furnish is preferably at least 1.5 kg/tonne dry fibre, such as at least 2.0 kg/tonne dry fibre.

The amount of hydrophobic size in the middle layer furnish is typically greater than in any of the print layer furnish and the back layer furnish. As an example, it may be at least 2.5 kg/tonne dry fibre, such as at least 3.0 kg/tonne dry fibre.

The hydrophobic size in each of the print layer furnish, the back layer furnish and the middle layer furnish may for example be independently selected from the group consisting of alkenyl succinic anhydride (ASA), alkyl ketene dimer (AKD), rosin size and combinations thereof. In a preferred embodiment, the hydrophobic size in each of the furnishes is a combination of AKD and rosin size. When such a combination is used, the headbox pH of the furnishes is preferably in the range of 6.6-7.2, such as 6.9-7.1.

The print layer web is merged with the middle layer web by couching. This is preferably done at a couching dryness above 10% (preferably above 13%) in order to reduce the strength of the interface between the print layer and the middle layer and thereby avoid delamination in the middle layer during folding. Here, couching dryness refers to the dryness of the print layer web at the point of couching. In one embodiment, the print layer web and the middle layer web both have a dryness above 10%, such as above 13%, at the point of couching.

Preferably, the back layer web is also merged with the middle layer web by couching at a couching dryness above 10% (preferably above 13%) in order to reduce the strength of the interface between the back layer and the middle layer. Here, couching dryness refers to the dryness of the back layer web at the point of couching. In one embodiment, the back layer web and the middle layer web both have a dryness above 10%, such as above 13%, at the point of couching.

The z-directional tensile strength ("z strength") of the CTMP is at least 150 kPa, such as at least 180 kPa, when measured according to ISO 15754:2009 after sheet forming according to ISO 5269-2:2004 (a suitable upper limit of this z strength may be 250 kPa). Thereby, the risk of delamination within the middle layer (and hence the risk of cracking, see below) is reduced. For the same reason, the tensile index of the CTMP is above 15 Nm/g, such as above 17 Nm/g, when measured according to ISO 1924-3:2005 after sheet forming according to ISO 5269-1:2005. A Rapid-Köthen automatic sheet forming machine is preferably used for said sheet forming according to ISO 5269-1:2005. "Tensile index" is the tensile strength obtained by ISO 1924:3:2005 divided by the grammage. Grammage is measured according to ISO 536:2019.

In one embodiment, the CSF of the CTMP of the middle layer furnish is below 600 ml, such as 500-580 ml, when measured according to ISO 5267-2:2001. Such a relatively low CSF value is associated with a favorable middle layer strength to interface strength ratio in the z direction.

To achieve bulk, the proportion of CTMP in the middle layer furnish is above 20% by dry weight, such as above 30% by dry weight, such as at least 32% by dry weight. The proportion of CTMP in the middle layer furnish is kept below 45% (e.g. 42% or lower) to in order to prevent the Scott Bond value from being too low. Accordingly, the proportion of CTMP in the middle layer furnish may be within any of the following ranges: above 20%, but below45%; above 20%, but no more than 42%; above 30%, but below45%; above 30%, but no more than 42%; at least 32%, but below45%; or at least 32%, but no more than 42%.

In addition to the CTMP, the middle layer furnish comprises broke pulp. The broke pulp may be obtained from the LPB production that the method of the present disclosure forms part of. The proportion of broke pulp in the middle layer furnish is typically in the range of 10%-50%, preferably 10%-35%, more preferably 20%-33%.

Further, the middle layer furnish comprises chemical pulp in the form of softwood kraft pulp. This chemical pulp may be bleached or unbleached. A particularly preferred type of chemical pulp is bleached softwood kraft pulp. The proportion of chemical pulp in the middle layer furnish is typically in the range of 10%-50%, such as 20%-40%. One reason for including chemical pulp (in the form of softwood kraft pulp), which is relatively strong type of pulp, is to balance the CTMP, which is a relatively weak type of pulp.

A suitable Schopper-Riegler (SR) number for the middle layer furnish is °18-°23. Such a SR number may be obtained by adapting the degree of refining of the respective pulps forming the middle layer furnish. The SR number is measured according to ISO 5267-1:1999.

The z strength of the middle layer furnish is preferably at least 375 kPa, such as at least 415 kPa, when measured according to ISO 15754:2009 after sheet forming according to ISO 5269-2:2004. A suitable upper limit is 545 kPa, such as 495 kPa.

In one embodiment, the provided CTMP is obtained by post-refining CTMP from a CTMP production process. As understood, such post-refining is carried out in the wet end of the LPB production process. However, the degree of post-refining is preferably low, e.g. below 30 kWh/tonne dry fibre.

In a machine trial carried out during production of a 290 g/m² three-layered (non-LPB) board having a middle formed from a furnish comprising 45% CTMP, 45% broke and 10% kraft pulp, it was shown that an increase of the amount of spray starch applied in the print layer/middle layer interface from 0.83 g/m² to 1.05 g/m² resulted in that the proportion of failures during Scott Bond testing in this interface was reduced from 100% to about 45% (see Fig. 1). Hence less than 1 g/m², such as less than 0.9 g/m² of starch is provided in the interface between the print layer web and the middle layer web. Consequently, in one embodiment of the method, no starch is provided in the interface between the print layer web and the middle layer web. For the avoidance of doubt, this does not include starch added to any of the furnishes upstream the headboxes.

Further, less than 1 g/m², such as less than 0.9 g/m² of starch may be provided in the interface between the back layer web and the middle layer web. Consequently, in one embodiment of the method, no starch is provided in the interface between the print layer web and the middle layer web. For the avoidance of doubt, this does not include starch added to any of the furnishes upstream the headboxes.

The method may comprise the step of coating the print layer with at least one coating layer. The at least one coating layer is typically pigment-based. The total coat weight (dry) may be 12-30 g/m².

The basis weight of the multi-layered LPB produced by the method (including any pigment-based coating) may for example be 150-350 g/m², preferably 210-310 g/m². The basis weight of the print layer (excluding any pigment-based coating) may be 45-90 g/m², such as 55-80 g/m². The basis weight of the back layer may be 40-70 g/m², such as 40-65 g/m². Basis weight (also referred to as grammage) is measured according to ISO 536:2019.

The density of the multi-layered LPB produced by the method may for example be 650-750 g/m². Density is measured according to ISO 534:2011.

The z strength of the multi-layered LPB produced by the method may for example be 280-415 kPa, such as 300-400 kPa. z strength is measured according to ISO 15754:2009.

The Scott Bond strength of the multi-layered LPB produced by the method may for example be 145-305, such as 170-250 kPa. Scott Bond strength is measured according to TAPPI T 569 om-09.

### EXAMPLES

### Reference trial

A three-layered liquid packaging board (LPB) was produced in a full-scale paperboard machine. The layer design of the LPB was as follows: a bleached print layer (65 g/m²), an unbleached back layer (60 g/m²), a middle layer (125 g/m²) and a pigment coating (19 g/m²) applied onto the print layer.

To prepare a print layer furnish, bleached hardwood kraft pulp (NBHK) and bleached softwood kraft pulp (NBSK) were mixed in a 60:40 dry weight ratio. Before the mixing, the NBHK and the NBSK were subjected to LC refining (65 and 150 kWh/tonne, respectively) such that both pulps obtained an °SR value of about 32. Before the print layer headbox, rosin size (1.5 kg/tonne), AKD (1 kg/tonne), alum (2.3 kg/tonne), strength agent (cationic starch, 2.5 kg/tonne), retention starch (3 kg/tonne), retention polymer (100 g/tonne) and silica (300 g/tonne) were added. In the print layer headbox, the consistency was 0.19% and the pH was 6.8.

A back layer furnish was prepared from unbleached softwood kraft pulp (UBK) that had been subjected to LC refining (100 kWh/tonne) to obtain a °SR value of about 23. Before the back layer headbox, rosin size (1.5 kg/tonne), AKD (1 kg/tonne), alum (1.5 kg/tonne), strength agent (cationic starch, 2.5 kg/tonne), retention starch (3 kg/tonne), retention polymer (100 g/tonne) and silica (300 g/tonne) were added. In the bottom layer headbox, the consistency was 0.18% and the pH was 6.8.

To prepare a middle layer furnish, broke pulp, NBSK and CTMP were used in a 30:35:35 dry weight ratio. The CTMP had a tensile index of about 13-14 Nm/g (when measured according to ISO 1924-3 after sheet forming according to ISO 5269-1:2005). Before mixing, the pulps were subjected to LC refining to obtain the following values: about °SR 30 for the broke pulp (refining energy: about 20 kWh/tonne); about °SR 23 for the NBSK (refining energy: about 100 kWh/tonne) and about CSF 550 ml for the CTMP (refining energy: about 20 kWh/tonne). Before the middle layer headbox, rosin size (2.5 kg/tonne), AKD (2.5 kg/tonne), alum (3.8 kg/tonne), strength agent (cationic starch, 2.5 kg/tonne), retention starch (3 kg/tonne), retention polymer (100 g/tonne) and silica (300 g/tonne) were added. In the middle layer headbox, the consistency was 0.41% and the pH was 6.8. The wire used for forming the middle layer included e.g. a top former and a breast roll shaker.

In the wire section (wire speed = 623 m/min), starch (0.7 g/m²) was sprayed to each of the print layer web and the back layer web. At the end of the wire section, the three individual webs (with the starch-sprayed side of the outer webs facing the middle web) were couched together to form a three-layered web. At the couching stage, the dry matter content of each web was about 14%-16%. In the press section arranged downstream the wire section, the three-layered web was pressed in three nips; a first double-felted shoe press nip (450 kN/m) followed by a second double-felted shoe press nip (600 kN/m) and a hard nip (50 kN/m).

Downstream the press section, the three-layered web was dried in a drying section and then calendered in a hard nip calender at a line load of 20 kN/m and a temperature of 240°C. After the calendering, the web was coated in a coating section having several coating stations. In a blade coating station, 7.5 g/m² of a pigment coating composition was coated onto the surface of the print layer. In another station, which was a metering size press (MSP), a small amount (0.4 g/m²) of starch was coated onto the back surface. In a second blade coating station, another 11.5 g/m² of a pigment coating composition was coated onto the top surface. Hence a total of 19 g/m² was coated onto the print surface and a total of 0.4 g/m² was coated onto the back surface.

### Inventive trial

A three-layered liquid packaging board (LPB) was produced in a full-scale paperboard machine. The layer design of the LPB was as follows: a bleached print layer (65 g/m²), an unbleached back layer (50 g/m²), a middle layer (125 g/m²) and a pigment coating (19 g/m²) applied onto the print layer.

To prepare a print layer furnish, bleached hardwood kraft pulp (NBHK) and bleached softwood kraft pulp (NBSK) were mixed in a 30:70 dry weight ratio. Before the mixing, the NBHK and the NBSK were subjected to LC refining (50 and 120 kWh/tonne, respectively) such that both pulps obtained °SR values of 28 and 25, respectively. Before the print layer headbox, rosin size (1.5 kg/tonne), AKD (1.5 kg/tonne), alum (2.3 kg/tonne), strength agent (cationic starch, 2.5 kg/tonne), retention starch (3 kg/tonne), retention polymer (50 g/tonne) and silica (150 g/tonne) were added. In the print layer headbox, the consistency was 0.19% and the pH was 7.0.

A back layer furnish was prepared from unbleached softwood kraft pulp (UBK) that had been subjected to LC refining (100 kWh/tonne) to obtain a °SR value of about 23. Before the back layer headbox, rosin size (1.5 kg/tonne), AKD (1 kg/tonne), alum (1.5 kg/tonne), strength agent (cationic starch, 2.5 kg/tonne), retention starch (3 kg/tonne), retention polymer (100 g/tonne) and silica (300 g/tonne) were added. In the bottom layer headbox, the consistency was 0.18% and the pH was 7.0.

To prepare a middle layer furnish, broke pulp, NBSK and CTMP were used in a 30:35:35 dry weight ratio. The CTMP had a tensile index of about 18-19 Nm/g (when measured according to ISO 1924-3 after sheet forming according to ISO 5269-1:2005). Before mixing, the pulps were subjected to LC refining to obtain the following values: about °SR 30 for the broke pulp (refining energy: about 10-20 kWh/tonne); about °SR 23 for the NBSK (refining energy: about 100 kWh/tonne) and about CSF 560-565 ml for the CTMP (refining energy: about 10-20 kWh/tonne). Approximative properties of the refined CTMP and the furnish (containing all three pulps) are provided in table 1 below. Before the middle layer headbox, rosin size (2.5 kg/tonne), AKD (2.5 kg/tonne), alum (3.8 kg/tonne), strength agent (cationic starch, 1 kg/tonne), retention starch (3 kg/tonne), retention polymer (75 g/tonne) and silica (225 g/tonne) were added. In the middle layer headbox, the consistency was 0.37% and the pH was 7.0. The wire used for forming the middle layer included e.g. a top former and a breast roll shaker.

**Table 1. Approximative properties of refined CTMP and middle layer furnish, measured after sheet forming according to ISO 5269- 2:2004.**

| | CTMP | Middle layer furnish |
|---|---|---|
| Thickness [µm] | 196 | 172 |
| Grammage [g/m²] | 96 | 102 |
| Density [kg/m³] | 492 | 595 |
| Tensile strength [kN/m] | 1.8 | 4.2 |
| Tensile stiffness [kN/m] | 373 | 578 |
| Strain at break [%] | 0.65 | 1.60 |
| Tensile Energy absorption (TEA) [J/m²] | 7.7 | 48.6 |
| z strength [kPa] | 207 | 455 |
| Scott bond [J/m²] | 55 | 248 |

In the wire section (wire speed = 623 m/min), starch (0.7 g/m²) was sprayed to each of the print layer web and the back layer web. At the end of the wire section, the three individual webs (with the starch-sprayed side of the outer webs facing the middle web) were couched together to form a three-layered web. At the couching stage, the dry matter content of each web was about 14%-16%. In the press section arranged downstream the wire section, the three-layered web was pressed in three nips; a first double-felted shoe press nip (390 kN/m) followed by a second double-felted shoe press nip (460 kN/m) and a hard nip (50 kN/m).

Downstream the press section, the three-layered web was dried in a drying section and then calendered in a hard nip calender at a line load of 20 kN/m and a temperature of 240°C. After the calendering, the web was coated in a coating section having several coating stations. In a blade coating station, 7.5 g/m² of a pigment coating composition was coated onto the surface of the print layer. In another station, which was a metering size press (MSP), a small amount (0.4 g/m²) of starch was coated onto the back surface. In a second blade coating station, another 11.5 g/m² of a pigment coating composition was coated onto the top surface. Hence a total of 19 g/m² was coated onto the print surface and a total of 0.4 g/m² was coated onto the back surface.

### Evaluation

LPB produced in the Reference trial and the Inventive trial was tested according to the Scott bond method. However, the main interest of the analysis was not the measured Scott Bond value, but the point of failure (i.e. where in the z direction the board broke). In more detail, 50 samples from the Reference trial and 25 samples from the Inventive trial were subjected to Scott Bond testing and then analyzed visually and weighed to determine the point of failure in the z direction. The results are presented in Fig. 2, which shows that for the samples from the Reference trial, 80% (40/50) of all failures occurred in the middle layer and only 20% (10/50) of the failures occurred in the middle layer/print layer interface. In contrast, for the samples from the Inventive trial, 12% (3/25) of all failures occurred in the middle layer and 88% (22/25) of the failures occurred in the middle layer/print layer interface. It is believed that the main reason for this repositioning of the failures from the middle layer interior to the middle layer/print layer interface was the change of CTMP quality. Further, it is known from earlier research that delamination in the interfaces rather than in the middle layer significantly reduces the cracking tendency during converting to LPB packages (Nygards et al., PAPER PHYSICS, Nordic Pulp & Paper Research Journal Vol 29 no (3) 2014).

### Couching dryness trial

To test the influence of the web dryness at the couching stage, results from two full-scale machine runs were compared. In one of the runs, the dryness of each web was about 16% (the "high dryness run") and in the other run, the dryness of the back layer and middle layer webs was still about 16%, whereas the dryness of the print layer web as about 7% (the "low dryness run"). Otherwise, the operating conditions of both machine runs were about the same as those of the Inventive trial described above.

The shear strength profiles across the z direction of boards produced in the high dryness run and the low dryness run were established according the methodology described in Nygards et al. (see full reference above). The results are presented in Fig. 3, which shows that the low dryness run resulted in a middle layer/print layer interface of significantly higher strength.

## Claims

1. A method of producing a multi-layered liquid packaging board (LPB) comprising a print layer, a back layer and a middle layer, said method comprising the steps of:
- providing a chemithermomechanical pulp (CTMP) and forming a middle layer furnish comprising the CTMP, broke pulp, softwood kraft pulp and hydrophobic size;
- forming a middle layer web from the middle layer furnish in a forming section of a full-scale paperboard machine;
- forming a print layer web from a print layer furnish in the forming section, which print layer furnish comprises hydrophobic size;
- forming a back layer web from a back layer furnish in the forming section, which print layer furnish comprises hydrophobic size;
- merging the print layer web to the middle layer web by couching at a couching dryness above 10%, such as above 13%,
wherein:
the z strength of the CTMP is at least 150 kPa, such as at least 180 kPa, when measured according to ISO 15754:2009 after sheet forming according to ISO 5269-2:2004;
the tensile index of the CTMP is above 15 Nm/g when measured according to ISO 1924-3 after sheet forming according to ISO 5269-1:2005;
the proportion of CTMP in the middle layer furnish is above 20%, but below 45%; and
less than 1 g/m² of starch is provided in the interface between the print layer web and the middle layer web.

2. The method of claim 1, wherein the tensile index of the CTMP is above 17 Nm/g when measured according to ISO 1924-3 after sheet forming according to ISO 5269-1:2005.

3. The method of claim 1, wherein the CSF of the CTMP of the middle layer furnish is below 600 ml, such as 500-580 ml.

4. The method of any one of the preceding claims, wherein the proportion of CTMP in the middle layer furnish is above 30% by dry weight, such as 32%-42% by dry weight.

5. The method of any one of the preceding claims, wherein the proportion of broke pulp in the middle layer furnish is less than 35%, such as 20%-33%.

6. The method of any one of the preceding claims, wherein the proportion of softwood kraft pulp in the middle layer furnish is 20%-40%.

7. The method of any one of the preceding claims, wherein the Schopper-Riegler number of the middle layer furnish is 18-23.
The method of any one of the preceding claims, wherein the z strength of the middle layer furnish is at least 375 kPa, such as at least 415 kPa, when measured according to ISO 15754:2009 after sheet forming according to ISO 5269-2:2004.

8. The method of any one of the preceding claims, wherein the provided CTMP is obtained by post-refining CTMP from a CTMP production process.

9. The method of any one of the preceding claims, wherein less than 0.9 g/m² of starch is provided in the interface between the print layer web and the middle layer web.

10. The method of any one of the preceding claims, wherein the amount of hydrophobic size in the print layer furnish is at least 1.5 kg/tonne dry fibre, such as at least 1.5 kg/tonne dry fibre.

11. The method of any one of the preceding claims, wherein the amount of hydrophobic size in the back layer furnish is at least 1.5 kg/tonne dry fibre, such as at least 2.0 kg/tonne dry fibre.

12. The method of any one of the preceding claims, wherein the amount of hydrophobic size in the middle layer furnish is at least 2.5 kg/tonne dry fibre, such as at least 3.5 kg/tonne dry fibre.

13. The method of any one of the preceding claims, wherein:
the hydrophobic size in the print layer furnish is selected from the group consisting of ASA, AKD, rosin size and combinations thereof;
the hydrophobic size in the back layer furnish is selected from the group consisting of ASA, AKD, rosin size and combinations thereof; and/or
the hydrophobic size in the middle layer furnish is selected from the group consisting of ASA, AKD, rosin size and combinations thereof.

## Patentansprüche

1. Verfahren zur Herstellung eines mehrschichtigen Flüssigkeitsverpackungskartons (LPB), der eine Druckschicht, eine Rückschicht und eine Mittelschicht aufweist, wobei das Verfahren die folgenden Schritte aufweist:
- Bereitstellen eines chemithermomechanischen Zellstoffs (CTMP) und Bilden einer Mittelschicht-Beschickung, die CTMP, Ausschusszellstoff, Weichholz-Kraftzellstoff und hydrophobe Leimmasse aufweist;
- Bilden einer Mittelschichtbahn aus der Mittelschicht-Beschickung in einem Formungsabschnitt einer vollwertigen Kartonmaschine;
- Bilden einer Druckschichtbahn aus einer Druckschicht-Beschickung in dem Formungsabschnitt, wobei die Druckschicht-Beschickung hydrophobe Leimmasse aufweist;
- Bilden einer Rückschichtbahn aus einer Rückschicht-Beschickung in dem Formungsabschnitt, wobei der Druckschicht-Beschickung eine hydrophobe Leimmasse aufweist;
- Zusammenführen der Druckschichtbahn mit der Mittelschichtbahn durch Gautschen bei einer Gautschtrockenheit von über 10 %, beispielsweise über 13 %,
wobei:
die Z-Festigkeit des CTMP mindestens 150 kPa beträgt, beispielsweise mindestens 180 kPa, gemessen gemäß ISO 15754:2009, nach der Blattbildung gemäß ISO 5269-2:2004;
der Zugindex des CTMP mehr als 15 Nm/g beträgt, gemessen gemäß ISO 1924-3, nach der Blattbildung gemäß ISO 5269-1:2005;
der Anteil von CTMP in der Mittelschicht-Beschickung über 20 %, jedoch unter 45 %, beträgt; und
in der Grenzfläche zwischen der Druckschichtbahn und der Mittelschichtbahn weniger als 1 g/m² Stärke vorhanden ist.

2. Verfahren nach Anspruch 1, wobei der Zugindex des CTMP über 17 Nm/g beträgt, gemessen gemäß ISO 1924-3, nach der Blattbildung gemäß ISO 5269-1:2005.

3. Verfahren nach Anspruch 1, wobei der CSF des CTMP der Mittelschicht-Beschickung 600 ml, beispielsweise 500-580 ml, beträgt.

4. Verfahren nach einem der vorhergehenden Ansprüche, wobei der Anteil an CTMP in der Mittelschicht-Beschickung über 30 % des Trockengewichts, beispielsweise 32 %-42 % des Trockengewichts, beträgt.

5. Verfahren nach einem der vorhergehenden Ansprüche, wobei der Anteil an Ausschusszellstoff in der Mittelschicht-Beschickung weniger als 35 %, beispielsweise 20-33 %, beträgt.

6. Verfahren nach einem der vorhergehenden Ansprüche, wobei der Anteil an Weichholz-Kraftzellstoff in der Mittelschicht-Beschickung 20-40 % beträgt.

7. Verfahren nach einem der vorhergehenden Ansprüche, wobei die Schopper-Riegler-Zahl der Mittelschicht-Beschickung 18-23 beträgt.
Verfahren nach einem der vorhergehenden Ansprüche, wobei die Z-Festigkeit der Mittelschicht-Beschickung mindestens 375 kPa, beispielsweise mindestens 415 kPa, beträgt, gemessen gemäß ISO 15754:2009, nach der Blattbildung gemäß ISO 5269-2: 2004.

8. Verfahren nach einem der vorhergehenden Ansprüche, wobei der bereitgestellte CTMP durch Nachveredelung von CTMP aus einem CTMP-Produktionsprozess erhalten wird.

9. Verfahren nach einem der vorhergehenden Ansprüche, wobei weniger als 0,9 g/m² Stärke in der Grenzfläche zwischen der Druckschichtbahn und der Mittelschichtbahn bereitgestellt werden.

10. Verfahren nach einem der vorhergehenden Ansprüche, wobei die Menge an hydrophober Leimmasse in der Druckschicht-Beschickung mindestens 1,5 kg/Tonne Trockenfaser, beispielsweise mindestens 1,5 kg/Tonne Trockenfaser, beträgt.

11. Verfahren nach einem der vorhergehenden Ansprüche, wobei die Menge an hydrophober Leimmasse in der Rückschicht-Beschickung mindestens 1,5 kg/Tonne Trockenfaser, beispielsweise mindestens 2,0 kg/Tonne Trockenfaser, beträgt.

12. Verfahren nach einem der vorhergehenden Ansprüche, wobei die Menge an hydrophober Leimmasse in der Mittelschicht-Beschickung mindestens 2,5 kg/Tonne Trockenfaser, beispielsweise mindestens 3,5 kg/Tonne Trockenfaser, beträgt.

13. Verfahren nach einem der vorhergehenden Ansprüche, wobei:
die hydrophobe Leimmasse in der Druckschicht-Beschickung aus der Gruppe bestehend aus ASA, AKD, Kolophoniumleim und Kombinationen davon ausgewählt wird;
die hydrophobe Leimmasse in der Rückschicht-Beschickung aus der Gruppe bestehend aus ASA, AKD, Kolophoniumleim und Kombinationen davon ausgewählt wird; und/oder
die hydrophobe Leimmasse in der Mittelschicht-Beschickung aus der Gruppe bestehend aus ASA, AKD, Kolophoniumleim und Kombinationen davon ausgewählt wird.

## Revendications

1. Procédé de production d'un carton d'emballage liquide multicouche (LPB) comprenant une couche d'impression, une couche arrière et une couche intermédiaire, ledit procédé comprenant les étapes suivantes :
- la fourniture d'une pâte chimico-thermomécanique (CTMP) et la formation d'un produit de couche intermédiaire comprenant la CTMP, la pâte brisée, la pâte kraft de résineux et la taille hydrophobe ;
- la formation d'une bande de couche intermédiaire à partir du produit d'alimentation de couche intermédiaire dans une section de formation d'une machine à carton à grande échelle ;
- la formation d'une bande de couche d'impression à partir d'un produit d'alimentation de couche d'impression dans la section de formation, lequel produit d'alimentation de couche d'impression comprend un format hydrophobe ;
- la formation d'une bande de couche arrière à partir d'un produit d'alimentation de couche arrière dans la section de formation, lequel produit d'alimentation de couche d'impression comprenant une taille hydrophobe ;
- la fusion de la bande de couche d'impression avec la bande de couche intermédiaire par couchage à une siccité de couchage supérieure à 10 %, notamment supérieure à 13 %,
dans lequel :
la résistance z du CTMP est d'au moins 150 kPa, telle que d'au moins 180 kPa, lorsqu'elle est mesurée selon la norme ISO 15754:2009 après le formage de la feuille selon la norme ISO 5269-2:2004 ;
l'indice de traction du CTMP est supérieur à 15 Nm/g lorsqu'il est mesuré conformément à la norme ISO 1924-3 après le formage de la feuille conformément à la norme ISO 5269-1:2005 ;
la proportion de CTMP dans la couche intermédiaire du produit de couche intermédiaire est supérieure à 20 %, mais inférieure à 45 % ;
et
moins de 1 g/m² d'amidon est présent à l'interface entre la bande de la couche d'impression et la bande de la couche intermédiaire.

2. Procédé selon la revendication 1, dans lequel l'indice de traction de la CTMP est supérieur à 17 Nm/g lorsqu'il est mesuré selon la norme ISO 1924-3 après formage de la feuille selon la norme ISO 5269-1:2005.

3. Procédé selon la revendication 1, dans lequel le CSF de la CTMP du produit de couche intermédiaire est inférieur à 600 ml, tel que compris entre 500 et 580 ml.

4. Procédé selon l'une quelconque des revendications précédentes, dans lequel la proportion de CTMP dans le produit de couche intermédiaire est supérieure à 30 % en poids sec, telle que comprise entre 32 % et 42 % en poids sec.

5. Procédé selon l'une quelconque des revendications précédentes, dans lequel la proportion de pâte brisée dans le produit de couche intermédiaire est inférieure à 35 %, telle que comprise entre 20 % et 33 %.

6. Procédé selon l'une quelconque des revendications précédentes, dans lequel la proportion de pâte kraft de résineux dans le produit de couche intermédiaire est comprise entre 20 % et 40 %.

7. Procédé selon l'une quelconque des revendications précédentes, dans lequel l'indice de Schopper-Riegler de la pâte de la couche intermédiaire est compris entre 18 et 23.
Procédé selon l'une quelconque des revendications précédentes, dans lequel la résistance z du produit de couche intermédiaire est d'au moins 375 kPa, telle que d'au moins 415 kPa, lorsqu'elle est mesurée selon la norme ISO 15754:2009 après le formage de la feuille selon la norme ISO 5269-2:2004.

8. Procédé selon l'une quelconque des revendications précédentes, dans lequel la CTMP fournie est obtenue par post-raffinage d'une CTMP issue d'un processus de production de CTMP.

9. Procédé selon l'une quelconque des revendications précédentes, dans lequel moins de 0,9 g/m² d'amidon est fourni dans l'interface entre la bande de la couche d'impression et la bande de la couche intermédiaire.

10. Procédé selon l'une quelconque des revendications précédentes, dans lequel la quantité de taille hydrophobe dans le produit de couche d'impression est d'au moins 1,5 kg/tonne de fibres sèches, telle qu'au moins 1,5 kg/tonne de fibres sèches.

11. Procédé selon l'une quelconque des revendications précédentes, dans lequel la quantité de taille hydrophobe dans le produit de couche arrière est d'au moins 1,5 kg/tonne de fibres sèches, telle qu'au moins 2,0 kg/tonne de fibres sèches.

12. Procédé selon l'une quelconque des revendications précédentes, dans lequel la quantité de taille hydrophobe dans le produit de couche intermédiaire est d'au moins 2,5 kg/tonne de fibres sèches, telle qu'au moins 3,5 kg/tonne de fibres sèches.

13. Procédé selon l'une quelconque des revendications précédentes, dans lequel :
la taille hydrophobe dans le produit de couche d'impression est choisie dans le groupe constitué par l'ASA, l'AKD, la taille de la colophane et les combinaisons de ceux-ci ;
la taille hydrophobe du produit de couche arrière est choisie dans le groupe constitué par l'ASA, l'AKD, la colophane et des combinaisons de ces éléments ; et/ou la taille hydrophobe du produit de couche intermédiaire est choisie dans le groupe constitué par l'ASA, l'AKD, la taille de la colophane et des combinaisons de ces éléments.
